Europäisches Patentamt

European Patent Office

Office européen des brevets

(11) Veröffentlichungsnummer: **0 510 503 A2**

# EUROPÄISCHE PATENTANMELDUNG

(21) Anmeldenummer: **92106491.1**

(22) Anmeldetag: **15.04.92**

(51) Int. Cl.5: **B29C 71/04**, B29C 59/16

(30) Priorität: **25.04.91 DE 4113523**

(43) Veröffentlichungstag der Anmeldung:
**28.10.92 Patentblatt 92/44**

(84) Benannte Vertragsstaaten:
**CH DE FR GB LI NL**

(71) Anmelder: **ABB PATENT GmbH
Kallstadter Strasse 1
W-6800 Mannheim 31(DE)**

(72) Erfinder: **Esrom, Hilmar, Dr.
Auf der Höhe 6
W-6803 Edingen-Neckarhausen(DE)**
Erfinder: **Baier, Michael
St. Ingbertstrasse 3
W-6800 Mannheim(DE)**
Erfinder: **Kogelschatz, Ulrich, Dr.
Obere Parkstrasse 8
CH-Hausen b. Brugg(CH)**

(74) Vertreter: **Rupprecht, Klaus, Dipl.-Ing. et al
c/o ABB Patent GmbH, Postfach 10 03 51
W-6800 Mannheim 1(DE)**

(54) **Verfahren zur Behandlung von Oberflächen.**

(57) Die Erfindung bezieht sich auf ein Verfahren zur Reinigung oder Modifizierung von Oberflächen (2) von Substraten (2), die als Fasern, Vliese, Gewebe oder Folien ausgebildet sein können. Zur Reinigung bzw. Modifizierung der Oberflächen (2S) werden reaktive Radikale durch Bestrahlung von Gasmolekülen mit UV-Licht gebildet, das eine Wellenlänge zwischen 60 und 350 nm aufweist. Die so gebildeten Radikale werden mit der Oberfläche (2S) des Substrats (2) zur Reaktion gebracht.

EP 0 510 503 A2

Die Erfindung bezieht sich auf ein Verfahren zur Behandlung von Oberflächen von Substraten aus anorganischen oder organischen Werkstoffen.

Bis jetzt wurden Oberflächen von Bauelementen mit Hilfe von Säuren, Laugen oder Halogen-Kohlenwasserstoffen für die Weiterbearbeitung gereinigt oder vorbehandelt. Die Kontrolle dieser Behandlung ist jedoch schwierig und mit einer großen Umweltbelastung verbunden. Zusätzlich bringt eine solche Behandlung unsaubere Arbeitsplatzbedingungen mit sich. Mit Hilfe von Plasmaverfahren wurde ebenfalls schon versucht, Oberflächen von Bauteilen oder Werkstoffen für die Weiterbehandlung zu reinigen oder vorzubereiten. Die Anwendung des Plasmaverfahrens ist jedoch mit hohem Aufwand verbunden. Je nach Anregungsart des Plasmas wird nur eine schwache Wirkung auf die Oberfläche erzielt bzw. die Anwendung des Verfahrens ist aufwendig und oftmals wegen der Wärmebelastung von nicht temperaturbeständigen Substraten, beispielsweise aus Kunststoff, nicht anwendbar.

Der Erfindung liegt deshalb die Aufgabe zugrunde, ein Verfahren aufzuzeigen, mit dem Oberflächen von Substraten aus organischen und anorganischen Werkstoffen für die Weiterbehandlung gereinigt oder modifiziert werden können, wobei die Nachteile der bekannten Verfahren vermieden werden.

Diese Aufgabe wird erfindungsgemäß durch die Merkmale des Patentanspruches 1 gelöst.

Mit dem erfindungsgemäßen Verfahren können die Oberflächen von Substraten, auch wenn sie aus wärmeempfindlichen Materialien hergestellt sind, gereinigt bzw. modifiziert werden. Das Verfahren erlaubt neben der Reinigung auch die Entfernung dünner organischer Schichten. Durch die Behandlung der Oberflächen wird die Haftfestigkeit für ein nachfolgendes Metallisieren, Bedrucken, Lackieren oder Verkleben erhöht. Die Modifizierung bzw. Reinigung der Oberflächen ist bei faserförmigen Materialien, Vliesstoffen, Geweben oder Folien möglich. Erfindunggemäß werden je nach zu reinigender Oberfläche reaktive Radikale von Sauerstoff, Ammoniak, Chlor, Fluor, Kohlenwasserstoff, Fluorwasserstoff und Distickstoffmonoxid erzeugt. Diese Radikale reagieren mit der Oberfläche des zu behandelnden Substrats. Hierbei wird entweder eine Oxidationsschicht ausgebildet, oder es kommt zur Reaktion der Radikale mit Atomen des Oberflächenmaterials derart, daß eine Abspaltung und damit Abtragung von Material erfolgt. Erfindungsgemäß werden die Radikale mit Hilfe einer UV-Strahlung erzeugt, die eine definierte Wellenlänge aufweist. Weitere erfindungswesentliche Merkmale sind in den Unteransprüchen gekennzeichnet.

Anhand einer schematischen Zeichnung wird das Verfahren näher erläutert.

Die einzige zur Beschreibung gehörende Zeichnung zeigt einen Reaktor 1, in dem ein Substrat 2 angeordnet ist. Ferner ist innerhalb des Reaktors 1 ein UV-Hochleistungstrahler 3 installiert, der nachfolgend auch Excimerstrahler genannt wird. Der Reaktor 1 weist ferner die Zuleitung 4 für ein Gas auf. Der UV-Hochleistungsstrahler 3 ist ausführlich in der EP-OS 0 254 111 offenbart. Er besteht aus einem durch eine einseitig gekühlte Metallelektrode (hier nicht dargestellt) und ein Dielektrikum (ebenfalls nicht dargestellt) begrenzten und mit einem Edelgas oder Gasgemisch gefüllten Entladungsraum (hier nicht dargestellt). Das Dielektrikum und die auf der dem Entladungsraum abgewandten Oberfläche des Dielektrikum liegende zweite Elektrode (hier nicht dargestellt) sind für die durch stille elektrische Entladung erzeugte Strahlung transparent. Durch die Konstruktion und durch eine geeignete Wahl der Gasfüllung wird ein großflächiger UV-Hochleistungsstrahler 3 mit hohem Wirkungsgrad geschaffen. Mit Hilfe einer Gasfüllung aus Helium und Argon kann eine UV-Strahlung mit einem Wellenlängenbereich zwischen 60 und 100 nm bzw. 107 und 165 nm erzeugt werden. Mit einer Gasfüllung aus Xenon kann mit dem Hochleistungsstrahler 3 UV-Strahlung mit einer Wellenlänge zwischen 160 und 190 nm erzeugt werden, wobei das Maximum hierbei bei 172 nm liegt. Eine Gasfüllung aus Argonfluorid bzw. Kryptonfluorid erlaubt die Erzeugung einer UV-Strahlung im Bereich von 180 bis 200 nm bzw. 240 bis 255 nm. Mit einem Gasgemisch aus Xenon und Chlor läßt sich mit dem Hochleistungsstrahler eine UV-Wellenlänge von 300 bis 320 nm und mit einem Gemisch aus Krypton und Chlor eine Wellenlänge von 222 nm erzeugen. Der Hochleistungsstrahler 3 arbeitet im quasi gepulsten Betrieb. Soll das in dem Reaktor 1 angeordnete Substrat auf seiner gesamten Oberfläche behandelt werden, so wird ein Hochleistungsstrahler 3 verwendet, dessen Strahlungsfeld ebenso groß ist, wie die Substratoberfläche 2S. Über die Zuleitung 4 kann Luft, Sauerstoff, Ammoniak, Chlor, Fluor, Chlorwasserstoff, Fluorwasserstoff oder ein anderes Gas eingeleitet werden, das durch Bestrahlung mit UV-Strahlung in reaktive Radikale aufgespalten wird. Das Substrat 2 ist beispielsweise aus einer Polycarbonat/Styrol-Polymerisatlegierung (PC/ABS) hergestellt. Der Hochleistungsstrahler 3 wird mit einer Gasfüllung aus Xenon versehen. Die Xenonentladung führt durch Elektronenstoß zur Bildung angeregter Xenonatome und im Anschluß daran zur Excimerbildung. Die erzeugte UV-Strahlung weist eine Wellenlänge von 172 nm auf. Wird nun über die Zuleitung 4 Luft oder Sauerstoff in den Reaktor 1 eingeleitet, so werden die Sauerstoffmoleküle gespalten. Die Strahlung wird bei Atmosphärendruck bereits in einer dünnen Sauerstoffschicht von etwa 1 mm Dicke absorbiert. Durch Herabsetzung des Druckes bis in den Vakuumbereich ($10^{-6}$ mbar) oder Beimischung eines in diesem Spektralbereich nicht absorbierbaren inerten Gas, wie beispielsweise Argon oder Helium, kann die Absorptionslänge so eingestellt werden, daß die UV-Strahlung bis zur Substratoberfläche durchdringt. Bei der Spaltung der Sauerstoffmoleküle mit der UV-Strahlung entstehen die sehr reaktiven Fragmente $O(^3P)$ und $O(^1D)$, die mit der freien Substratoberfläche bzw. adsorbierenden Schichten der Oberfläche reagieren. Ferner bildet sich aus Reaktionen der Sauerstoffatome mit den Sauerstoffmolekülen Ozon, das ebenfalls sehr reaktionsfreudig ist, und mit der Oberfläche des Substrats 2 ebenfalls reagiert. Die Behandlung der Substratoberfläche 2S dauert etwa 0,05 bis 10 Minuten. Das Substrat kann dann weiter bearbeitet werden. Mit dem erfindungsgemäßen Verfahren können nicht nur Bauteile aus Metall, sondern auch aus Kunststoff, Keramik sowie faserförmigen Materialien, Glas, Vliesstoffen, Geweben oder Folien behandelt werden.

Anstelle von Sauerstoff können auch andere Gase in Form von Ammoniak, Chlor, Fluor, Chlorwasserstoff, Fluorwasserstoff und Distickstoffmonoxid in den Reaktor eingeleitet werden. Die Wahl des einzuleitenden Gases richtet sich zum einen danach, aus welchem Material das Substrat gefertigt ist, und zum anderen danach, welche Oberflächenbehandlung vorgesehen ist. Ob beispielsweise die Ausbildung einer Oxidschicht gewünscht wird bzw. das Abtragen von Material vorgesehen ist. Eine drastische Erhöhung der Haftfestigkeit von stromlos abgeschiedenem Kupfer auf PC/ABS kann durch Belichtung dieses Werkstoffes im Grobvakuum bei $10^{-3}$ mbar erzielt werden. Die Belichtungszeiten liegen zwischen ca. 1 und 3 min bei 300 W und einer UV-Wellenlänge von 172 nm. Bei Verwendung stärkerer UV-Eximerstrahler kann die Belichtungszeit wesentlich verkürzt werden.

Auch im Vakuum zwischen $10^{-1}$ bis $10^{-6}$ mbar kann durch die UV-Bestrahlung die Oberfläche gereinigt und reaktiv werden. Hierbei kommt es zum Aufbrechen von einzelnen Bindungen von Kunststoffmolkülen an der Oberfläche.

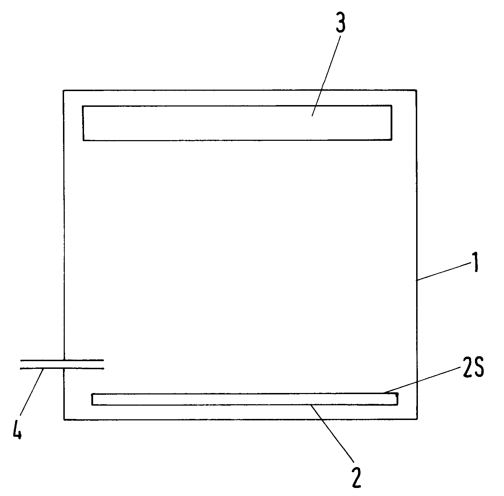

**Patentansprüche**

1. Verfahren zur Behandlung von Oberflächen von Substraten (2) aus organischen oder anorganischen Werkstoffen, dadurch gekennzeichnet, daß reaktive Radikale erzeugt und mit der Oberfläche (2S) des Substrats (2) zur Reaktion gebracht werden.

2. Verfahren nach Anspruch, dadurch gekennzeichnet, daß zur Bildung der Radikale Moleküle von Sauerstoff, Ammoniak, Chlor, Flour, Chlorwasserstoff, Fluorwasserstoff und Distickstoffmonoxid mit UV-Strahlung bestrahlt werden.

3. Verfahren nach einem der Ansprüche 1 oder 2, dadurch gekennzeichnet, daß die Moleküle zur Bildung der Radikale mit UV-Strahlung einer Wellenlänge zwischen 60 nm und 350 nm bestrahlt werden.

4. Verfahren nach einem der Ansprüche 1 bis 3, dadurch gekennzeichnet, daß zur Erzeugung der UV-Strahlung ein in der EP-OS 0 254 111 beschriebener UV-Hochleistungsstrahler (3) verwendet wird.

5. Verfahren nach Anspruch 4, dadurch gekennzeichnet, daß der UV-Hochleistungsstrahler (3) mit einer Gasfüllung aus Helium, Argon, Xenon, Argonfluorid, Kryptonfluorid oder einem Gasgemisch aus Xenon und Chlor bzw. Krypton und Chlor versehen und damit UV-Strahlung mit einer Wellenlänge zwischen 60 und 350 nm erzeugt wird.

6. Verfahren nach einem der Ansprüche 1 bis 5, dadurch gekennzeichnet, daß die Behandlung in einem Reaktor unter Atmosphärendruck oder im Vakuum durchgeführt wird.